# NOUVEAU FASCICULE DE BREVET EUROPEEN

(11) **EP 3 290 288 B2**
(45) Date de publication et mention de la décision concernant l'opposition: **03.08.2022**
(45) Mention de la délivrance du brevet: 06.02.2019
(21) Numéro de dépôt: 17188791.2
(22) Date de dépôt: 31.08.2017
(51) Int. Cl.: B61D 27/00, F25B 25/00

(54) **SYSTÈME DE TRAITEMENT D'AIR POUR UN VÉHICULE DE TRANSPORT TERRESTRE, VÉHICULE COMPRENANT UN TEL SYSTÈME, ET PROCÉDÉ DE TRAITEMENT D'AIR**
SYSTEM ZUR LUFTAUFBEREITUNG FÜR EIN LANDTRANSPORTFAHRZEUG, FAHRZEUG, DAS EIN SOLCHES SYSTEM UMFASST, UND LUFTAUFBEREITUNGSVERFAHREN
AIR HANDLING SYSTEM FOR A LAND TRANSPORT VEHICLE, VEHICLE COMPRISING SUCH A SYSTEM AND AIR HANDLING METHOD

(30) Priorité: 01.09.2016 FR 1658131
(43) Date de publication de la demande: 07.03.2018
(73) Titulaire: ALSTOM Holdings, 93400 Saint-Ouen-sur-Seine (FR)
(72) Inventeur: ABOU-EID, Rami, 75014 Paris (FR); CHEVALIER, Philippe, 92500 Rueil Malmaison (FR); HEUZE, Alexandre, 93400 Saint Ouen (FR)
(74) Mandataire: Lavoix

(56) Documents cités:
- EP-A1- 2 894 419
- WO-A1-2005/014365
- WO-A2-2005/025959
- BE-A5- 1 001 214
- FR-A1- 2 629 414
- FR-A1- 2 859 691
- JP-A- H 079 995
- JP-A- 2006 021 571
- US-B1- 6 330 909
- 'A Novel Approach to Air-Conditioning of Underground Railway', 2008
- "Feasibility Report", New Tube for London, October 2014 (2014-10), pages 1-53,

## Description

L'invention concerne un procédé de traitement d'air pour un véhicule de transport terrestre.

Dans les véhicules ferroviaires, il est connu d'implanter des systèmes de traitement d'air, notamment de climatisation, incluant des unités de traitement d'air dans chacun des compartiments passagers et une machine frigorifique permettant de produire des frigories, c'est-à-dire de l'énergie calorifique négative apte à refroidir un environnement en extrayant la chaleur de l'intérieur du véhicule et en la rejetant à l'extérieur du véhicule.

Lors du passage des véhicules dans des endroits fermés, tels que des tunnels, le rejet de chaleur à l'extérieur du véhicule provoque un échauffement de l'air des tunnels, ce qui provoque une augmentation constante de la température des tunnels.

Pour résoudre ce problème, il est connu, notamment de WO-A-2005/014365 et WO-A-2005/025959, d'équiper les véhicules ferroviaires d'unités de stockage de frigories, par exemple sous forme de glace ou de liquide conservés à une température prédéterminée, afin de fournir la source froide nécessaire à la climatisation du véhicule lors du passage dans un tunnel sans mettre en oeuvre la machine frigorifique et ainsi rejeter de la chaleur dans le tunnel.

Dans WO-A-2005/014365, l'unité de stockage de frigories doit être rechargée régulièrement notamment en glace, tandis que dans WO-A-2005/025959, le matériau servant à stocker les frigories est une glace produite lors de la circulation du véhicule à l'air libre à l'aide d'une unité de production spécifique utilisant notamment des produits chimiques tels que du glycol.

De telles solutions techniques présentent l'inconvénient d'impliquer des unités de stockage de frigories peu pratiques, et nécessitant un rechargement régulier en produits spécifiques, utilisés pour produire le froid nécessaire au refroidissement lors du passage dans des tunnels.

C'est à ces inconvénients qu'entend plus particulièrement remédier l'invention en proposant un nouveau procédé de traitement d'air pour un véhicule de transport terrestre, notamment ferroviaire, dans lequel le froid nécessaire lors du passage dans des tunnels est obtenu de façon plus économique et efficace par rapport aux techniques de l'art antérieur.

A cet effet, l'invention concerne un procédé tel que défini à la revendication 1.

Grâce à l'invention, le froid utilisé lors du passage dans des lieux fermés ne nécessite pas de matières spécifiques et met uniquement en oeuvre des composants qui sont déjà présents dans le véhicule, de par l'utilisation de la machine frigorifique qui est prévue pour la circulation à l'air libre et dont la production de froid excédentaire est utilisée pour recharger l'unité de stockage de frigories.

Selon un aspect avantageux mais non obligatoire de l'invention, le procédé comprend des étapes consistant à :
a) mesurer la température externe et la température de l'air extrait de l'intérieur du véhicule;
b) calculer une température de consigne et une charge de refroidissement correspondante;
c) déterminer si le véhicule est dans un lieu fermé ou partiellement clos ;
d) si le véhicule est à l'air libre, fournir la charge de refroidissement déterminée à l'étape b) à partir de la machine frigorifique et stocker l'excédent dans l'unité de stockage de frigorifies ;
e) si le véhicule est dans un lieu clos ou partiellement clos, mesurer l'état de charge de l'unité de stockage de frigories;
f) si l'état de charge de l'unité de stockage de frigories est de l'ordre de zéro, fournir la charge frigorifique à partir de la machine frigorifique ;
g) si l'état de charge de l'unité de stockage de frigories est supérieur à zéro, fournir la charge frigorifique à partir de l'unité de stockage de frigories.

L'invention sera mieux comprise et d'autres avantages de celle-ci apparaitront plus clairement à la lumière de la description qui va suivre d'un système de traitement d'air mettant en œuvre un procédé conforme à son principe, faite en référence aux dessins annexés dans lesquels :
- la figure 1 est une vue d'un véhicule ferroviaire incorporant un système de traitement d'air mettant en œuvre un procédé conforme à l'invention, dans une première configuration ;
- la figure 2 est une vue similaire à la figure 1, pour une deuxième configuration ;
- la figure 3 est un schéma logique d'une méthode de contrôle du système de traitement d'air, conforme à l'invention.

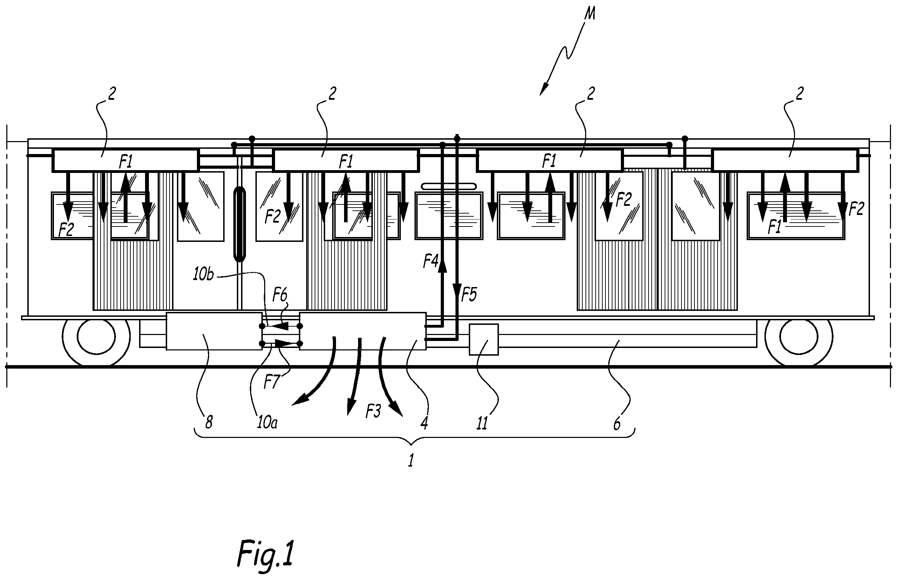

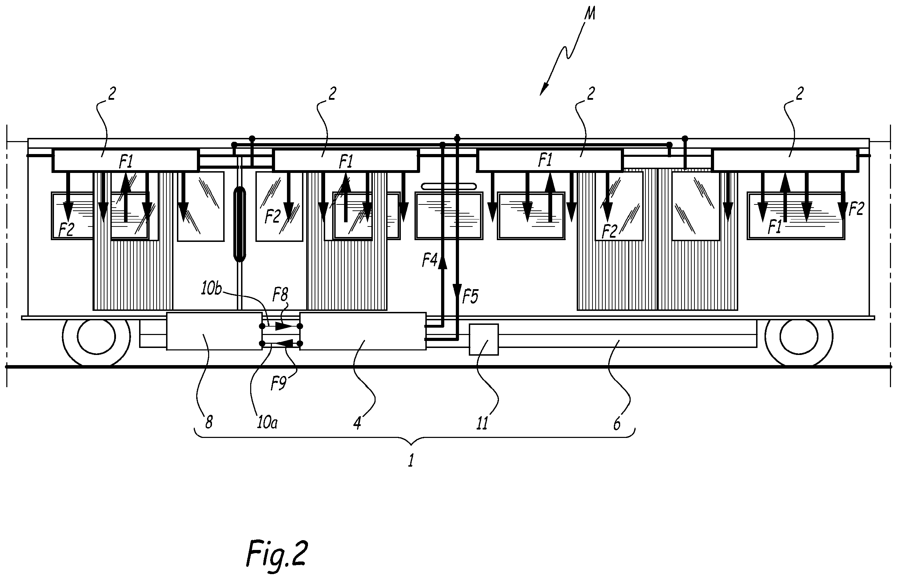

Les figures 1 et 2 représentent une partie d'un véhicule ferroviaire M, dans le cas présent un métro. Le véhicule ferroviaire peut également être en variante un train, un tramway ou tout autre type de véhicule roulant sur un chemin de fer et l'invention s'applique également à tout autre type de véhicule de transport terrestre roulant sur terre, sur route, tel qu'un bus, un camion, une voiture, un véhicule minier, etc et susceptible de circuler alternativement à l'air libre et dans des lieux fermés ou partiellement clos.

La partie du véhicule M représentée sur les figures 1 et 2 est plus spécifiquement une voiture faisant partie d'une rame de métro. Cette voiture est adaptée pour accueillir des passagers et le véhicule M comprend à cet effet un système de traitement d'air 1 qui inclut des unités de traitement d'air 2 reparties dans le métro M, dont plusieurs dans la voiture représentée dans cet exemple.

Chacune de ces unités de traitement d'air 2 comprend un échangeur et des moyens de ventilation non représentés, permettant d'extraire un flux d'air ambiant F1 de l'intérieur du métro M, et d'insuffler un flux d'air neuf F2 traité et refroidi potentiellement par son passage dans l'échangeur de chaque unité 2. Le système de traitement d'air 1 comprend une machine frigorifique 4 qui est implantée, dans cet exemple, dans une partie basse 6 du métro M. La machine frigorifique 4 est adaptée pour faire circuler, dans les échangeurs des unités de traitement 2, un fluide frigorigène refroidi de manière à faire régner dans l'espace intérieur du métro M une température prédéfinie.

En fonctionnement, la machine frigorifique 4 absorbe la chaleur du flux d'air extrait F1 du volume intérieur du métro 6 et la rejette à l'extérieur du véhicule M, selon le principe classique d'une climatisation. Ce fonctionnement ne présente pas d'inconvénients lorsque le véhicule ferroviaire M circule dans un espace situé à l'air libre, comme c'est le cas sur la figure 1. La machine frigorifique 4 rejette dans ce cas un flux d'air chaud F3 à l'extérieur.

En revanche, lorsque le véhicule M circule dans un espace fermé ou semi-clos, tel qu'un tunnel, ou une station souterraine, la chaleur rejetée à l'extérieur du véhicule M augmente considérablement et de façon cumulative la température de l'espace fermé ou semi-clos dans lequel le véhicule M circule.

Le système de traitement d'air 1 comprend donc une unité de stockage de frigories 8. L'unité 8 est également, dans cet exemple, implantée dans la partie basse 6 et est adaptée pour être rechargée en frigories par la machine frigorifique 4. L'unité de stockage de frigories 8 et la machine frigorifique 4 sont à cet effet reliées par un circuit de fluide frigorigène comprenant deux conduites 10a et 10b. Les conduites 10a et 10b permettent l'envoi de fluide frigorigène vers l'unité 8 pour le stockage de frigories, tandis que du fluide frigorigène réchauffé est renvoyé vers la machine frigorifique 4.

La machine frigorifique 4 est adaptée pour fournir le fluide frigorigène aux unités de traitement d'air 2 indépendamment de l'unité de stockage de frigories 8. Ainsi, même si l'unité de stockage de frigories 8 a un taux de charge nul, la machine frigorifique 4 est capable de fournir directement une quantité suffisante de fluide caloporteur aux unités de traitement d'air 2. Ce type de fonctionnement, représenté sur la figure 1, a lieu lorsque le véhicule M circule à l'air libre. L'approvisionnement en fluide frigorigène refroidi est représenté par la flèche F4, tandis que le retour du fluide frigorigène réchauffé après relâchement de ses frigories dans l'air neuf F2 est représenté par une flèche F5.

Lorsque les besoins des unités de traitement d'air 2 sont couverts par la puissance frigorifique de la machine frigorifique 4, le surplus de frigories produit par la machine frigorifique 4 est stocké dans l'unité de stockage de frigories 8. Le fluide frigorigène refroidi est dirigé selon la flèche F6 dans la conduite 10b vers l'unité 8, et en ressort après avoir libéré ses frigories selon la flèche F7 dans la conduite 10a.

L'unité de stockage de frigories 8 peut mettre en oeuvre tout type de moyens de stockage de frigories, tels que par exemple de l'eau distillée, de l'eau minérale, de l'eau normale de réseau, des matériaux à changement de phase. Ce moyen de stockage va récupérer des frigories de fluides frigorigènes tels que des gaz de réfrigération (R134A, R407C, 1234YF, R22, R410, R744, R513...), des fluides caloporteur ou frigoporteur (tels que eau glycolée qui est une eau normale de réseau à laquelle on a ajouté un certain pourcentage de glycol. Au sens strict, les glycols sont des diols dans lesquels les deux groupes hydroxyle sont portés par des atomes différents de carbone, habituellement mais pas nécessairement vicinaux. Le glycol est également un synonyme du plus simple de ces glycols, l'éthylène glycol (ou éthane-1,2-diol, HOCH₂-CH₂OH) qui est un diol vicinal. Il s'agit du plus important diol industriel, largement utilisé comme antigel. Le propylène glycol a aussi de nombreux usages industriels (pharmaceutique, agropharmaceutique, aéronautique, etc.) et est moins toxique. Cette liste est non exhaustive et peut comprendre aussi un fluide type temper Base d'acétate et formiate de potassium. D'autres types de frigoporteurs peuvent être utilisés comme le friogel, le temper, etc.

Lorsque le véhicule M passe dans un endroit dont la température moyenne évoluera sous l'effet de la chaleur dégagée par une machine frigorifique, c'est-à-dire un endroit fermé ou partiellement clos, tel qu'un tunnel, les frigories stockées dans l'unité de stockage 8 sont fournies aux unités de traitement d'air 2, tandis que les échanges de chaleur opérés par la machine frigorifique 4 sont stoppés. Une telle configuration est représentée à la figure 2. Les frigories sont dirigées vers les unités de traitement d'air 2 via la machine frigorifique 4 sans y subir d'échanges thermiques. La circulation du fluide frigorigène dans les conduites 10a et 10b est inversée, les frigories étant transférées selon la flèche F8 dans la conduite 10b, et le fluide frigorigène réchauffé redirigé vers l'unité 8 selon la flèche F9 par la conduite 10a. L'intérieur du véhicule M est donc refroidi sans que de la chaleur soit rejetée à l'extérieur du véhicule M et ne réchauffe la température ambiante du tunnel.

Selon une variante non représentée, lorsque l'unité de stockage de frigories 8 fournit les unités de traitement d'air 2, un circuit de fluide frigorigène complètement découplé de la machine frigorifique 4 et directement raccordé aux unités de traitement d'air 2 peut être mis en oeuvre.

Le système 1 comprend un dispositif de contrôle 11 adapté pour déterminer si le véhicule M circule dans un lieu fermé ou à l'air libre, par exemple par captation de pression, par caméra, par positionnement GPS, etc.

Le dispositif de contrôle 11 est également adapté pour enclencher la production de frigories par la machine frigorifique 4 si l'unité de stockage de frigories 8 présente une charge nulle.

Le dispositif de contrôle 11 est adapté pour mesurer la température extérieure au véhicule M, ainsi que la température de l'air ambiant présent à l'intérieur du véhicule M, et déterminer la quantité de frigories à délivrer par la machine frigorifique 4 ou l'unité de stockage de frigories 8 pour obtenir une température de confort dans l'intérieur du véhicule M.

La capacité de l'unité de stockage de frigories 8 est dimensionnée de manière que l'unité de stockage de frigories 8 puisse être entièrement rechargée par la machine frigorifique 4 lorsque le véhicule M circule à l'air libre ou se trouve dans une zone dite de recharge (station, dépôt...), et que l'unité de stockage de frigories 8 puisse fournir des frigories pendant tout le temps de circulation du véhicule ferroviaire M dans un lieu fermé ou partiellement clos.

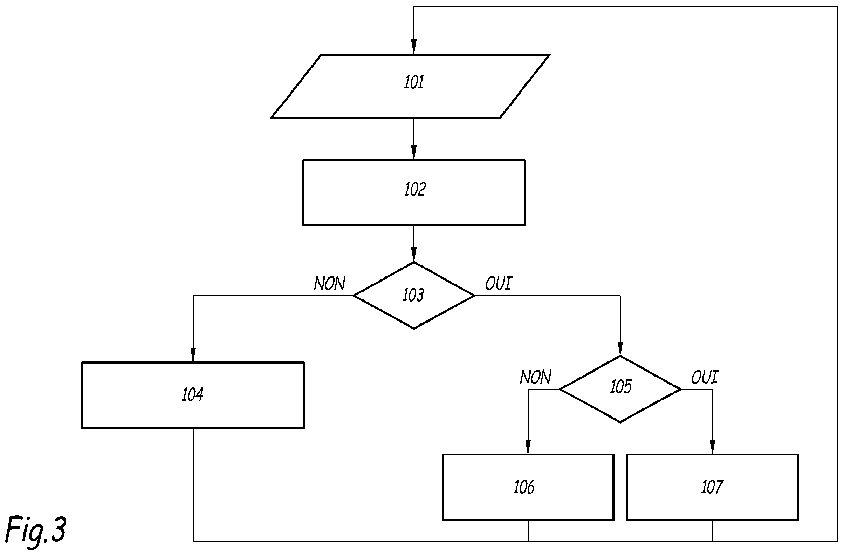

Le système 1 est mis en oeuvre dans le cadre d'une méthode de contrôle fonctionnant par itérations de calcul, dont le fonctionnement est décrit ci-après en relation avec la figure 3.

A chaque itération, la température externe, c'est-à-dire la température à l'extérieur du véhicule, et la température de l'air extrait de l'intérieur du véhicule M sont mesurées dans une étape 101. Dans une seconde étape 102, une température de consigne est calculée sur la base des températures externe et interne mesurées à l'étape 101. La température de l'air extrait à l'intérieur du véhicule M est comparée à la température de consigne, et cette comparaison permet de déterminer une charge de refroidissement qui indique la quantité de frigories à fournir pour obtenir la température de consigne dans l'espace interne du véhicule M. Dans une troisième étape 103, l'algorithme détermine, en utilisant l'un ou l'autre des moyens décrits ci-dessus, si le véhicule M est dans un tunnel. Si le véhicule M n'est pas dans un tunnel, la charge de refroidissement est supportée, dans une étape 104, par la machine frigorifique 4. L'excédent de charge frigorifique produite par la machine frigorifique 4 et qui n'est pas nécessaire au refroidissement de la température interne du véhicule est stocké dans l'unité de stockage de frigories 8.

Dans le cas où l'étape 103 détermine que le véhicule M est dans un tunnel, l'état de charge de l'unité de stockage de frigories 8 est mesuré dans une étape 105. Si à l'étape 105 l'état de charge de l'unité de stockage de frigories 8 est de l'ordre de 0, la charge de refroidissement est supportée par la machine frigorifique 4, dans une étape 106. Si l'état de charge est supérieur à 0, la charge de refroidissement est supportée par l'unité de stockage de frigories 8, dans une étape 107.

Les étapes 101 à 107 sont de préférence déclenchées par le dispositif de contrôle 11, en utilisant des liaisons de communication électronique non représentées.

En variante non représenté, les diverses configurations de fonctionnement du système de traitement d'air 1 peuvent être déclenchées par des dispositifs de contrôle distincts.

## Revendications

1. Procédé de traitement d'air pour un véhicule de transport terrestre (M), équipé d'un système de traitement d'air (1) incluant :
- une ou plusieurs unités de traitement d'air (2),
- une machine frigorifique (4) alimentant en frigories les unités de traitement d'air (2), et
- une unité de stockage de frigories (8) adaptée pour être chargée par la machine frigorifique (4) et fournir des frigories aux unités de traitement d'air (2) lorsque le véhicule (M) circule dans un lieu fermé ou partiellement clos,
lequel procédé comporte une étape, qui est mise en œuvre lorsque le véhicule (M) circule à l'air libre et qui consiste à permettre à la machine frigorifique (4) de :
- produire des frigories, en rejetant à l'extérieur du véhicule (M) de la chaleur extraite d'un volume intérieur du véhicule, et
- fournir des frigories produites par la machine frigorifique aux unités de traitement d'air (2) indépendamment de l'unité de stockage de frigories (8), en fournissant directement aux unités de traitement d'air (2) des frigories depuis la production de frigories par la machine frigorifique, et
- s'il y a un surplus de frigories qui est produit par la machine frigorifique (4) en excèdent des frigories ayant été fournies directement aux unités de traitement d'air (2), fournir ce surplus de frigories à l'unité de stockage de frigories (8) dans laquelle le surplus de frigories est alors stocké,
et lequel procédé comporte également une étape, qui est mise en œuvre lorsque le véhicule (M) circule dans un tunnel et qui consiste à (i) stopper les échanges de chaleur opérés par la machine frigorifique (4) et (ii) fournir aux unités de traitement d'air (2) des frigories stockées dans l'unité de stockage de frigories (8).

## Patentansprüche

1. Verfahren zur Behandlung von Luft für ein Terrestrischer-Transport-Fahrzeug (M), das mit einem Luftbehandlungs-System (1) ausgestattet ist, das aufweist:
- eine oder mehrere Luftbehandlungs-Einheiten (2),
- eine Kältemaschine (4), die die Luftbehandlungs-Einheiten (2) mit Kälte versorgt,
- eine Kälte-Speichereinheit (8), die angepasst ist, um von der Kältemaschine (4) mit Kälte beladen zu werden und um Kälte an die Luftbehandlungs-Einheiten (2) zu liefern, wenn das Fahrzeug (M) in einem geschlossenen oder teilweise geschlossenen Ort fährt,
wobei das Verfahren einen Schritt aufweist, der durchgeführt wird, wenn das Fahrzeug (M) an der Luft fährt, und der darin besteht, der Kältemaschine (4) zu ermöglichen:
- Kälte zu erzeugen, indem von einem inneren Volumen des Fahrzeugs (M) abgeführte Wärme an das Äußere des Fahrzeugs abgegeben wird, und
- von der Kältemaschine erzeugte Kälte unabhängig von der Kälte-Speichereinheit (8) an die Luftbehandlungseinheiten (2) zu liefern, indem den Luftbehandlungs-Einheiten (2) direkt Kälte aus der Kälteerzeugung durch die Kältemaschine zugeführt wird, und
- wenn es einen Überschuss von Kälte gibt, der von der Kältemaschine (4) erzeugt wird, der die Kälte übersteigt, die direkt an die Luftbehandlungs-Einheiten (2) geliefert wurde, zu liefern dieser überschüssigen Kälte an die Kälte-Speichereinheit (8), in der die überschüssige Kälte dann gelagert wird,
und wobei das Verfahren auch einen Schritt aufweist, der durchgeführt wird, wenn das Fahrzeug (M) in einem Tunnel fährt, und der darin besteht, (i) den von der Kältemaschine (4) betriebenen Wärmeaustausch zu stoppen und (ii) die Luftbehandlungs-Einheiten (2) mit in der Kälte-Speichereinheit (8) gespeicherten Kälten zu versorgen.

## Claims

1. An air handling method for a land transport vehicle (M) equipped with an air handling system (1) including:
- one or more air handling units (2);
- a cooling machine (4) that supplies frigories to the air handling units (2); and
- a frigories storage unit (8) that is capable of being loaded by the cooling machine (4) and of supplying frigories to the air handling units (2) when the vehicle (M) is travelling in an enclosed or partially enclosed space;
which method includes a step, which is carried out when the vehicle (M) is travelling in open air and which consists in enabling the cooling machine (4) to:
- produce frigories, by discharging into the exterior of the vehicle (M) heat extracted from an interior volume of the vehicle, and
- supply frigories produced by the cooling machine to the air handling units (2) independently from the frigories storage unit (8), by directly supplying the air handling units (2) with frigories from frigories production by the cooling machine, and
- if there is a frigories surplus which is produced by the cooling machine (4) in excess of the frigories having been supplied directly to the air treatment units (2), supplying this frigories surplus to the frigories storage unit (8) in which the frigories surplus is then stored,
and which method also includes a step, which is carried out when the vehicle (M) is travelling in a tunnel and which consists in (i) stopping the heat exchanges operated by the cooling machine (4) and (ii) supplying the air handling units (2) with frigories stored in the frigories storage unit (8).
